(19) Europäisches Patentamt
European Patent Office
Office européen des brevets

(11) **EP 1 630 740 A1**

(12) **EUROPEAN PATENT APPLICATION**

(43) Date of publication:
**01.03.2006 Bulletin 2006/09**

(51) Int Cl.:
***G06Q 40/00*** *(2006.01)*

(21) Application number: **05107769.1**

(22) Date of filing: **24.08.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **25.08.2004 SE 4020715** | (71) Applicant: **Cinnober Financial Technology AB**<br>**112 46 Stockholm (SE)**<br><br>(72) Inventor: **BERTILSSON, Pär Olov**<br>**167 67, BROMMA (SE)**<br><br>(74) Representative: **Loqvist, Gabriel Mathias**<br>**Dr. Ludwig Brann Patentbyra AB**<br>**P.O. Box 17192**<br>**10462 Stockholm (SE)** |

(54) **Method and system for derivative instruments support**

(57)     The invention relates to a method, a central system, an application, and an electronic memory means for a pricing function (20) for derivatives of market maker participants (16). Market makers are electronically addressing the application recalculating the pricing function (20) of the derivatives to an option price for an underlying instrument pricing, having an underlying reference parameter (Ref). The function made up by parameters being approximately constant in an interval. Thus, the function can be approximated as a linear function (22) within the interval. The processing of the function in a trade server (18) reduces the risk in lost time for participants (16) handling with derivatives, and minimizes the processing and the distribution effort at a central system by letting the recalculating of the pricing function (20) be performed at the central system and its application therefore.

Fig. 2

**Description**

**Technical field**

The present invention pertains to a method, a central system, an application, and an electronic memory means for an option pricing function for derivatives.

**Background art**

Modern electronic trading systems are currently implemented as a three tier layer model; back-end servers, intermediate servers and trading applications.

The exchange providing a market place for trading often provides its service using an electronic trading platform. An exchange operates the back-end system and intermediate servers. Participants connect to the exchange platform using a trading application which is either an application provided by the exchange or more often an own proprietary developed application being integrated with the participants internal systems.

Trading servers typically provide trading services such as processing order requests, order matching, trade capture, settlement and clearing. Very often all trading functionality is not kept in one server; it is rather distributed over a set of physical servers.

An intermediate server layer handles the trading application connectivity. Received request are dispatched to an appropriate back-end server depending on the request. The intermediate layer is also responsible for feeding updates of information back to trading applications.

In a typical information flow, the trading system receives updates from trading applications, applies these updates to the central servers /trading servers, and then distributes the updates to all trading applications.

Market markers are participants in a system, who are obliged to provide a "market". The market makers ensure that the market is liquid i.e. that there is a buy and sell interest. There exists a sort of economic incitement for market makers to make a market. In a derivate market, derivate products are priced based upon the price of an underlying product. For example in a stock option market there will be multiple options based upon a single stock. There will be stock options for different exercise prices and exercise dates.

A market maker buys and sells financial instruments thereby creating a market. The market maker submits quotes to the marketplace, which is the price at which he or she is willing to buy and sell financial instruments.

For a derivative instrument, the market maker calculates the quote according to a public or proprietary formula. The formula calculates a theoretical price of the derivative instrument from the price of the underlying instrument and some further parameters such as the risk-free interest rate and volatility of the underlying.

The bid and ask quotes are calculated as offsets from the theoretical price. A marketplace normally only allows prices at certain levels called price ticks, thus the market maker adjusts the calculated quote to nearest price tick before it is submitted to the marketplace.

A derivate conveys the right for an underlying product such as a stock/share to be bought and sold to a determined price at a specific moment in time. The message flow for derivates is much more intensive then for a stock trading system. All parameter variables are constant for a relatively long time, but not the underlying price, and when it changes the option price changes.

When an underlying product price changes, the prices for all derivate products based upon the underlying product will change. Currently a number of algorithms exist for calculating option prices. The most famous algorithms are Black-Scholes and Cox-Ross-Rubinsten. There are many variants but most of them have their roots in these two algorithms. Many of the market makers have formulated own algorithms considering parameters being vital for their pricing.

In a market there is conventionally more than one market maker per underlying product. The infrastructure of a trading system is often so that the participants are not located at the same premises as the exchange.

In a derivate system the amount of request/updates are significantly larger than in a system trading the underlying products, which creates problems. The reasons are that for each underlying instrument there are multiple derived instruments, and there are multiple market makers per underlying product.

Assuming the following scenario for a stock option traded market. There is one stock X. For this stock X there are a number of stock options with different expiration dates and prices. The numbers of options are depending on expiration cycles and the movement of the underlying prices over the time. 50-100 options are not unusually for an underlying instrument. Every time the underlying price for X changes all market makers for X will re-calculate their option prices based on X and send in a request updating their option prices. Not all option prices will change, it depends on how much the underlying price moved, the expiration price and date, but in many cases 50% or more of the options are re-quoted. Having 4 market makers (MM) for an underlying product that has 75 option symbols will result in 4 MM * 75 Options * 50% = 150 quote updates being requested each time an underlying is changed.

Conventionally, each market maker will batch all quote requests in a single request transaction when sending it to the central system. Each incoming price update request from a market maker will result in a significant amount of activities in the central system such as the request being safe stored to a physical media for recovery an audit purpose. The system is synchronized with other activities in order to get a consistent and predictable execution of the request. Updates about the new prices are published to other participants in the trading community.

**Summary of the invention**

The present invention describes how market making is working for financial electronic markets trading derivative products in order to solve problems related to the trading. Furthermore, an alternative technique in accordance with the present invention is described overcoming the performance problems associated with processing quotes in an efficient way. Hence, the present invention is set forth in a central electronic system for pricing of derivative instruments. It comprises an application recalculating a pricing function of the derivatives each time an underlying price changes. Furthermore, the invention comprises the method steps of:

the function being approximated as linear in an interval of input parameters;
the function receiving the following input parameters underlying reference price, delta relation coefficient, underlying minimum price, underlying maximum price, derivative bid price, and derivative ask price;
the input parameters being provided by the participants pricing the derivative instruments;
the interval being defined within the limits of the underlying reference price equally enclosing the underlying minimum price and the underlying maximum price;
the delta defining the approximation gradient for the linearization; and
whereby a new input of parameters are provided every time the underlying price is changed to a value outside the interval, whereby the method reduces the risk in lost time for the participants, and minimizing the processing and the distribution effort at the central system by letting the recalculation of the pricing function be performed at the central system and its application.

In one embodiment the delta relation coefficient is normalized to a number between the limit -1 and +1.
Another embodiment comprises that the current derivative bid price equals the derivative bid price plus the multiplication of the delta relation coefficient with the subtraction of the current underlying price and the underlying reference price, and the current derivative ask price equals the derivate ask price plus the multiplication of the delta relation coefficient with the subtraction of the current underlying price minus the underlying reference price.
Moreover, the present invention sets forth a central electronic system in at least one of a data- and telecommunication network comprising at least a trading server as a central for pricing of derivative instruments. The trading server comprises an application recalculating a pricing function of the derivatives each time an underlying price changes, further comprising:

application software approximating the function as linear in an interval of input parameters, the function receiving the following input parameters underlying reference price, delta relation coefficient, underlying minimum price, underlying maximum price, derivative bid price, and derivative ask price;
application software for defining the interval within the limits of the underlying minimum price and the underlying maximum price;
the delta defining the approximation gradient for the linearization; and
input interface for input of the parameters every time the underlying price is changed to a value outside side the interval, whereby the method reduces the risk in lost time for the participants, and minimizing the processing and the distribution effort at the central system by letting the recalculation of the pricing function be performed at the central system and its application.

One embodiment of the system comprises that the delta relation coefficient is normalized to a number between the limit -1 and +1.
Another embodiment of the system comprises that the application software computes the current derivative bid price equals the derivative bid price plus the multiplication of the delta relation coefficient with the subtraction of the current underlying price and the underlying reference price, and the current derivative ask price equals the derivate ask price plus the multiplication of the delta relation coefficient with the subtraction of the current underlying price minus the underlying reference price.
Also, set forth by the present invention an application in a trading server for pricing of derivative instruments comprising an application recalculating a pricing function of the derivatives each times an underlying price changes. The application comprises:

the function being approximated as linear in an interval of input parameters;
the function receiving the following input parameters underlying reference price, delta relation coefficient, underlying minimum price, underlying maximum price, derivate bid price, and derivate ask price;
the input parameters being provided by the participants pricing the derivative instruments;
the interval being defined within the limits of the underlying minimum price and the underlying maximum price;
the delta defining the approximation gradient for the linearization; and
whereby a new input of parameters are provided every time the underlying price is changed to a value outside side the interval, whereby the method reduces the risk in lost time for the participants, and minimizing the processing and the distribution effort at the central system by letting the recalculation of the pricing function be performed at the central system and its application.

In one embodiment of the application the delta relation coefficient being normalized to a number between the limit -1 and +1.

One embodiment comprises that the current derivative bid price equals the derivative bid price plus the multiplication of the delta relation coefficient with the subtraction of the current underlying price and the underlying reference price, and the current derivative ask price equals the derivate ask price plus the multiplication of the delta relation coefficient with the subtraction of the current underlying price minus the underlying reference price.

Moreover, the present invention sets forth an electronic memory storing the application.

**Brief description of the drawings**

Henceforth the present invention is described with reference to its drawings for a better understanding of its embodiments and given examples, wherein:

**Fig. 1** illustrates a conventional prior art trading system; and
**Fig. 2** illustrates one embodiment of a function and its linear approximation in accordance with the present invention.

**Detailed description of preferred embodiments**

The present invention relates to a centralized market making quotation. The present invention idea of incorporating the market making functionality with the central processing is to radically improve the overall performance of a derivative trading system and lower the risk for market makers. With centralized market making, the market maker participants will provide sufficient data allowing the central system to calculate and provide prices on-behalf of the market makers.

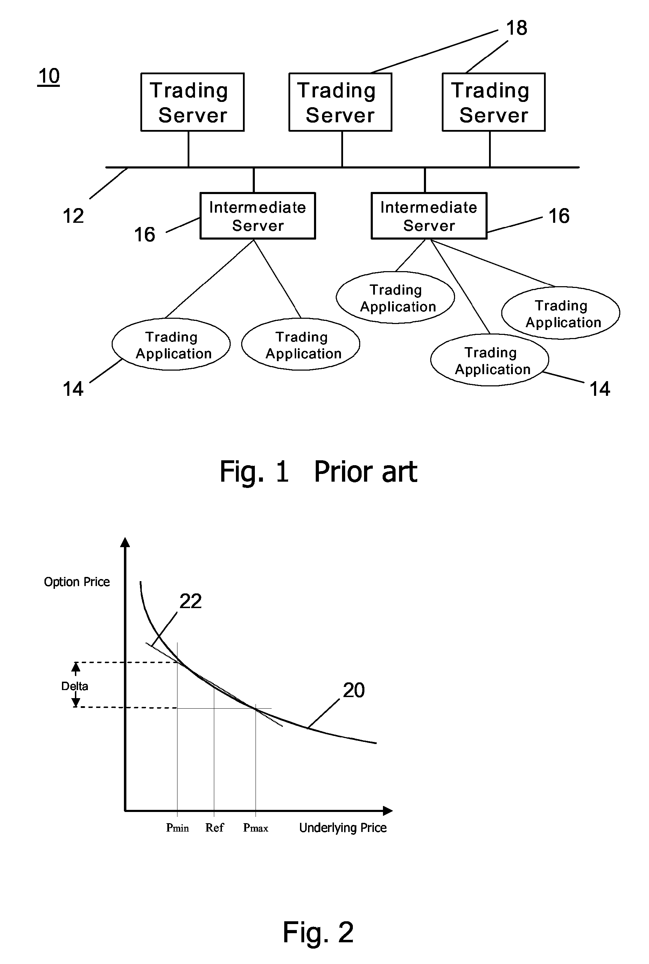

Fig. 1 illustrates a conventional prior art trading system 10, which can be modified to achieve the aims and goals of the present invention. The trading system 10 comprises a network 12 for data- and/or telecommunication where trading applications 14, such as derivatives, from customers to brokers and the like banking institutions transfer processing orders requests, order matching, trade captures, settlements, clearings and the like financial tasks. These transfers are received at the financial institutions/participants intermediate servers 16, at for instance a brokers or banking business sites, for further transfer to a matching at for instance an exchange trading the orders and quotes via a trading server 18. Modern electronic trading systems are today implemented as a three tier layer model; back-end servers, intermediate servers and trading applications. A typical message flow consists in that the trading system receives updates from trading applications, applies these updates to the central servers, and then distributes the updates to all trading applications.

The advantages with a central market making, are that the system subscribes to that an underlying product price changes from, for example, the stock exchange where the underlying product is traded. When receiving an underlying price change a matching engine/application calculates new prices based upon the underlying price update and the calculation information provided by each market maker. The advantages are that with central quotation users will not be forced to send in new transactions when the underlying price changes. This is by far the largest part of the in-transaction volume in current trading systems. The overhead associated with receiving and dispatching these transactions will be eliminated.

Exchange systems publish prices of the order book either as a consolidated view of price levels or all price updates in the book. With calculation of new prices for all market makers in a single operation the consolidated view will be updated just once instead of as many times as there are market makers for the underlying. The processing of re-calculate and processing new prices is done as a single operation, performing heavy processing steps like audit logging and system synchronizing just once instead of once per market maker.

Calculation takes place where the information is used. Since trades are located off exchange premises the underlying information must be distributed to the market maker participant calculated and then sent in to the exchange system. During this time the market makers pricing is off and the marker stands a risk to be taken.

A centralized quotation allows the central system to treat all market makers equally. With a distributed solution each market maker will insert their quotes when they have received and re-calculated the new prices. The quotes from the market makers will not be received at the central system at the same time and they are processed as they come first-come-first-served.

Hence the present invention provides a market making quotation schema. The problem with central price calculation is that each market maker has it own algorithm of calculating the prices. Far from all market makers would be attracted to use the "standard" algorithms such as Black-Scholes and Cox-Ross-Rubinsten. To overcome these problem the system of the present invention utilizes a delta pricing model allowing the market makers to use there own price calculation algorithm.

There are several input parameters to a pricing algorithm, such as interest rate, volatility, time to maturity, underlying product price and the like. Each time one of the parameters changes, the price must be recalculated. The update frequencies are very different for the different parameters: the most frequently updated parameter is the underlying product price.

It is reasonable to believe that for some interval of time as for instance an interval of time of perhaps one minute, it is feasible to regard all parameters except the underlying price as constant parameters. During this time, the pricing function is a one-to-one function from an underlying price to an option price. An example graph of such a function is depicted in Fig. 2.

Fig. 2 illustrates one embodiment of a pricing function 20 graph of derivatives and its linear approximation 22 in accordance with the present invention. An x-axis depicts underlying prices, and the y-axis depicts prices. A limit, determined by a given delta, is depicted on the y-axis, showing in which limits the price may acceptably change in accordance with a market makers provided delta, before the market makers has to provide new parameters to the central system application.

The relation between the price and the underlying price is not linear but at one given point the price for a given underlying price is known. The function may be approximated with a piece-wise linear curve.

Currently, all market makers calculate new quotes as soon as the underlying price changes and submit to the marketplace to update their current quote. There will always be a time lag from the change of the underlying price until all market makers have updated their quotes. The time lag may be more significant for a volatile underlying that may change on a per second basis, and where the market maker may have to calculate perhaps more than 100 quotes per underlying and the marketplace may have to update and disseminate the quotes for many market makers. The time lag in the updates of quotes between market makers together with a narrow price spread may cause the quotes to cross.

In accordance with the present invention, the marketplace adjusts the quotes of derivative instruments in the marketplace as a function of change of an underlying instrument. Quotes of the derivatives will be adjusted according to linear 22 approximations of the changes in the derivative price from a change in the underlying price. When the underlying price changes, the marketplace update all quotes at one time, thus reducing the risk for crossed quotes between market makers due to the time lag between updates. The number of quote updates to the marketplace will be reduced because the market maker does not have to update the quote as long as the linear 22 approximation is valid.

Updates from the marketplace are reduced because the quotes are dated at the same time and the updates can be sent in one message.

A market maker provides the underlying reference price and delta in addition to bid price, bid size, ask price, and ask size. Delta is a linear approximation of the relative change of the theoretical price of the derivative instrument due to change in the price of the underlying instrument. The delta is in one embodiment a number in the range [-1.0, +1.0].

In accordance with the present invention the central marketplace utilizes the current underlying price to calculate the current bid price and current ask price:

$$CurrentBidPrice = BidPrice + Delta * [UnderlyingPrice - UnderlyingReferencePrice]$$

$$CurrentAskPrice = AskPrice + Delta * [UnderlyingPrice - UnderlyingReferencePrice]$$

The current price is calculated when the quotes are entered, and each time the underlying price changes. An adjustment to a price tick will be market place specific. According to the invention two optional parameters are provided: lower underlying price and upper underlying price. Market makers may utilize these limits to indicate an interval of the underlying price where the quote is valid, whereby the marketplace shall withdraw the quote if the underlying price moves outside the indicated interval.

Input data that a market marker provides for central price calculation would be the following information:

**Ref**, the underlying reference price on which the price calculation will be based.

**Pmin** and **Pmax**, the underlying price interval for which the linear relation between option price and underlying is valid. Pmin == Minimum underlying price, Pmax == Maximum underlying price.

**Delta**, relation coefficient between underlying price and option price.

Example:

Reference price == 40.00
Delta = 0.1
Pmin = 9.00
Pmax =11.50
Derivate Bid Price = 3.00
Derivate Ask Price = 3.25

Given the reference price of 40.00 the market maker is willing to offer the market a price where the market will buy at 3.00 and sell at 3.25. If the underlying market price moved to 40.50 with a delta of 0.1 the price should be moved (40.00—40.50) * 0.1 = - 0.05. This will result in the market makers new prices would be 2.95 — 3.20. The market maker would have to provide one underlying reference price, and the outer limit values (Pmin and Pmax) for when the delta pricing is valid. A matrix/array with option bid/ask prices and delta for each underlying option instrument is provided. These parameters are given as an initial request to the central system.

As long as the underlying price is within the interval Pmin and Pmax the central pricing will calculate the option according to the given delta. When the underlying price moves outside the Pmin or Pmax boundary the market maker has to provide a new set of input data.

Hence, at least the following advantages would be conveyed by the present invention. A centralized prize model will significantly reduce the system efforts for providing market maker pricing for derivative products. This results in a more efficient marketplace system. The transaction volume from the trading applications to the central system will be dramatically decreased, since the Market Makers only need to enter new price curve approximations when parameters other than underlying price change. The volume of price publications will be decreased, since only one message is needed instead of one message per market maker.

As an additional benefit, the centralized price model will lower the market maker exposure and guarantee fairness among the market markers in the way their pricing is applied in the system.

In accordance with the above description, the present invention sets forth a method, a central system, an application and a an electronic memory means storing the application, of a financial market place for derivatives of market maker participants electronically addressing the system, having an application recalculating a pricing function of the derivatives to an option price for an underlying instrument pricing, having an underlying changing parameter. The particulars of the present invention are set out in the attached set of claims.

Means not specifically expressed could be provided as software or hardware and as a combination of software and hardware.

Although the present invention has been described through its embodiments and given examples, the attached set of claims provides further embodiments obvious to a person skilled in the art.

**Claims**

1. A method in a central electronic system for pricing of derivative instruments comprising an application recalculating a pricing function (20) of said derivatives each time an underlying price changes, comprising the steps of:

said function (20) being approximated as linear (22) in an interval of input parameters;
said function (22) receiving the following input parameters underlying reference price, delta relation coefficient, underlying minimum price, underlying maximum price, derivate bid price, and derivate ask price;
said input parameters being provided by the participants pricing said derivative instruments;
said interval being defined within the limits of said underlying minimum price (Pmin) and said underlying maximum price (Pmax);
said delta defining the approximation gradient for said linearization; and

whereby a new input of parameters are provided every time said underlying price is changed to a value outside side said interval, whereby said method reduces the risk in lost time for said participants, and minimizing the processing and the distribution effort at said central system (18) by letting said recalculation of said pricing function be performed at the central system and its application.

2. A method according to claim 1, wherein said delta relation coefficient being normalized to a number between the limit -1 and +1.

3. A method according to claims 1 or 2, wherein the current derivative bid price equals said derivative bid price plus the multiplication of said delta relation coefficient with the subtraction of the current underlying price and said underlying reference price, and the current derivative ask price equals said derivate ask price plus the multiplication of said delta relation coefficient with the subtraction of the current underlying price minus said underlying reference price.

4. A central electronic system in at least one of a data- and telecommunication network (12) comprising at least a trading server (18) as a central for pricing of derivative instruments, said trading server (18) comprising an application recalculating a pricing function (20) of said derivatives each time an underlying price changes, comprising:

   application software approximating said function as linear (22) in an interval of input parameters, said function receiving the following input parameters: underlying reference price, delta relation coefficient, underlying minimum price, underlying maximum price, derivative bid price, and derivative ask price;
   application software for defining said interval within the limits of said underlying minimum price (Pmin) and said underlying maximum price (Pmax);
   said delta defining the approximation gradient for said linearization (22); and
   input interface for input of said parameters every time said underlying price is changed to a value outside side said interval, whereby said method reduces the risk in lost time for said participants, and minimizing the processing and the distribution effort at said central system by letting said recalculation of said pricing function be performed at the central system and its application.

5. A system according to claim 4, wherein said delta relation coefficient is normalized to a number between the limit -1 and +1.

6. A system according to claims 4 or 5, wherein the current derivative bid price equals said derivative bid price plus the multiplication of said delta relation coefficient with the subtraction of the current underlying price and said underlying reference price, and the current derivative ask price equals said derivate ask price plus the multiplication of said delta relation coefficient with the subtraction of the current underlying price minus said underlying reference price.

7. An application in a trading server (18) for pricing of derivative instruments comprising an application recalculating a pricing function (20) of said derivatives each time an underlying price changes, comprising:

   said function being approximated as linear (22) in an interval of input parameters;
   said function (22) receiving the following input parameters underlying reference price, delta relation coefficient, underlying minimum price, underlying maximum price, derivative bid price, and derivative ask price;
   said input parameters being provided by the participants pricing said derivative instruments;
   said interval being defined within the limits of said underlying minimum price (Pmin) and said underlying maximum price (Pmax);
   said delta defining the approximation gradient for said linearization; and
   whereby a new input of parameters are provided every time said underlying price is changed to a value outside side said interval, whereby said method reduces the risk in lost time for said participants, and minimizing the processing and the distribution effort at said central system by letting said recalculation of said pricing function be performed at the central system and its application.

8. An application according to claim 7, wherein said delta relation coefficient being normalized to a number between the limit -1 and +1.

9. An application according to claims 7 or 8, wherein the current derivative bid price equals said derivative bid price plus the multiplication of said delta relation coefficient with the subtraction of the current underlying price and said underlying reference price, and the current derivative ask price equals said derivate ask price plus the multiplication of said delta relation coefficient with the subtraction of the current underlying price minus said underlying reference price.

10. An electronic memory storing the application according to claim 7.

10

Trading
Server

Trading
Server

Trading
Server

18

12

16

Intermediate
Server

Intermediate
Server

16

Trading
Application

Trading
Application

Trading
Application

Trading
Application

Trading
Application

14

14

## Fig. 1   Prior art

Option Price

22

Delta

20

Pmin   Ref   Pmax   Underlying Price

## Fig. 2

**European Patent Office**

**DECLARATION**
which under Rule 45 of the European Patent Convention shall be considered, for the purposes of subsequent proceedings, as the European search report

**Application Number**
EP 05 10 7769

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | G06Q40/00 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 2 December 2005 | Dedek, F |

EPO FORM 1504 (P04C37)